# EUROPÄISCHE PATENTSCHRIFT

(11) **EP 0 955 488 B1**
(45) Veröffentlichungstag und Bekanntmachung des Hinweises auf die Patenterteilung: **17.10.2001**
(21) Anmeldenummer: 98102657.8
(22) Anmeldetag: 17.02.1998
(51) Int. Cl.: F16H 61/18

(54) **Schaltvorrichtung für Wechselgetriebe von Kraftfahrzeugen mit einer Rückwärtsgangsperre**
Shift mechanism for change-speed gearing in motor vehicles with reverse gear lockout
Dispositif de changement de vitesses pour boîte de vitesses à plusieurs rapports pour véhicules automobiles, comportant un verrouillage de la marche arrière

(43) Veröffentlichungstag der Anmeldung: 10.11.1999
(73) Patentinhaber: Ford Global Technologies, Inc., Dearborn, Michigan 48126 (US)
(72) Erfinder: Kampmann, Frank, 58332 Schwelm (DE)
(74) Vertreter: Messulam, Alec Moses

(56) Entgegenhaltungen:
- EP-A- 0 234 267
- FR-A- 2 748 079
- GB-A- 2 278 653

## Beschreibung

Die Erfindung bezieht sich auf eine Schaltvorrichtung für Wechselgetriebe von Kraftfahrzeugen, mit einer Rückwärtsgangsperre, der im Oberbegriff des Patentanspruches 1 erläuterten Art.

Aus der GB 2 278 653 A ist eine Schaltvorrichtung für Wechselgetriebe von Kraftfahrzeugen mit einer Rückwärtsgangsperre bekannt, die dem Oberbegriff des Patentanspruches 1 entspricht und bei der der Sperranschlag für den Rückwärtsgang an einer entgegen der Kraft einer Feder verlagerbaren Zwischenplatte angeordnet ist und durch bewußte Betätigung am Schalthebel überwindbar ist, um den Rückwärtsgang einzurücken.

Diese bekannte Schaltvorrichtung weist den Nachteil auf, daß der am Eingang des Schaltgehäuses an einer schwenkbeweglichen Zwischenplatte angeordnete Sperranschlag für den Rückwärtsgang einen erheblichen baulichen Aufwand erfordert, der die Herstellungskosten einer solchen Schaltvorrichtung erhöht.

Darüber hinaus sind eine Vielzahl von Schaltvorrichtungen für Wechselgetriebe von Kraftfahrzeuge mit einer Rückwärtsgangschaltsperre bekannt, bei der ein Sperranschlag im Bereich des Eingangs des Schaltgehäuses durch bewußte Handhabung des Schalthebels, z.B. durch anheben oder durch niederdrücken, überwunden werden muß, bevor der Rückwärtsgang eingerückt werden kann.

Alle diese bekannten Schaltvorrichtungen weisen ebenfalls den Nachteil auf, daß hierfür aufwendige Führungen des Schalthebels mit entsprechenden Federanordnungen erforderlich sind.

Die Aufgabe der Erfindung ist es, eine Schaltvorrichtung für Wechselgetriebe von Kraftfahrzeugen mit einer Rückwärtsgangsperre gemäß dem Oberbegriff des Patentanspruches 1 derart zu verbessern, daß mit möglichst geringem Bauaufwand eine zuverlässige Schaltsperre für den Rückwärtsgang bereitgestellt wird, die durch eine entsprechende bewußte Betätigung am Schalthebel überwunden werden kann.

Gemäß der Erfindung wird diese Aufgabe gelöst, indem bei einer Schaltvorrichtung für Wechselgetriebe von Kraftfahrzeugen mit einer Rückwärtsgangsperre der im Oberbegriff des Patentanspruches 1 erläuterten Art, die im Kennzeichenteil des Patentanspruches 1 aufgezeigten Merkmale angewendet werden.

Dadurch, daß der Sperranschlag für den Rückwärtsgang durch einen unmittelbar in den Schaltweg des Rückwärtsganges einragenden festen Vorsprung gebildet wird, benachbart dem in der Neutralgasse ein Anschlag vorgesehen ist, von dem aus durch bewußte Betätigung am Schalthebel mittels elastischer Verformung eines Seilzuges oder eines Torsionselementes der Sperranschlag für den Rückwärtsgang in Form des festen Vorsprunges umgehbar ist und den Zugang in die Schaltgasse des Rückwärtsganges freigibt, wird mit einfachen baulichen Maßnahmen am Eingang des Schaltgehäuses selbst oder an einer entsprechenden festen Zwischenplatte eine Rückwärtsgangsperre geschaffen, die nicht nur ein unbeabsichtigtes Durchschalten aus einem Vorwärtsgang, z.B. dem 5. Gang in den Rückwärtsgang verhindert, sondern darüber hinaus bei jedem Einrücken des Rückwärtsganges durch bewußte Betätigung am Schalthebel überwunden werden muß.

Die Erfindung wird anhand einer in den Zeichnungen gezeigten schematischen Ausführungsformen näher erläutert. Es zeigt:
- Fig. 1: einen schematischen vertikalen Schnitt durch eine Schalthebelanordnung gemäß der Erfindung;
- Fig. 2: einen Schnitt entlang der Linie II-II in Fig. 1 in der Ebene des Sperranschlages in Gegenüberstellung des herkömmlichen im Getriebe angeordneten Schaltschema für den Schaltfinger für ein 5-gängiges Getriebe mit einem Rückwärtsgang in der Schaltgasse des 5. Ganges und
- Fig. 3 und 4: Wahlkraftdiagramme am Schalthebel bzw. am Schaltfinger.

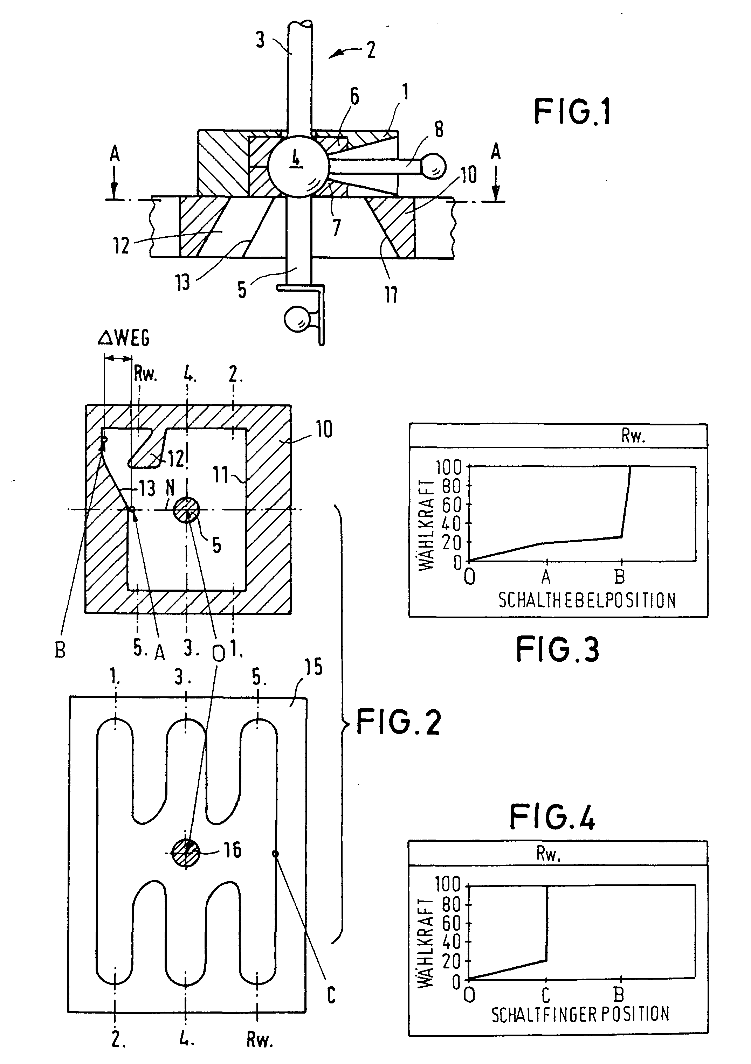

In Fig. 1 ist eine erfindungsgemäße Schaltvorrichtung nur schematisch angedeutet. Sie besteht im wesentlichen aus einem Schaltgehäuse 1 in dem ein Schalthebel 2 gelenkig gelagert aufgenommen ist. Der Schalthebel 2 kann hierbei einen äußeren Schalthebelteil 3, einen Kugelabschnitt 4 und einen unteren Schalthebelteil 5 aufweisen, wobei der Kugelabschnitt 4 in zwei entsprechenden Kugelpfannen 6 und 7, die im Schaltungsgehäuse 1 angeordnet sind, in bekannter Weise gelenkig abgestützt wird. Am Kugelabschnitt 4 kann sich ein weiterer Schalthebelteil 8 anschließen, sofern die Schaltvorrichtung zur Betätigung einer sogenannten Bowden-Zugschaltung vorgesehen ist, bei denen der eine Schalthebelteil 5 die Schaltbewegung und der andere Schalthebelteil 8 die Wählbewegung überträgt.

Im Bewegungsbereich des inneren Schalthebelteiles 5 ist eine Zwischenplatte 10 in geeigneter Weise am Schaltgehäuse 1 befestigt und diese weist eine aus dem oberen Teil der Fig. 2 ersichtliche Innenkontur 11 auf.

Durch Strich-Punkt-Linien sind in Fig. 2 die sogenannte Neutral- oder Vorwählgasse N und die Schaltgassen 1/2, 3/4, 5/Rw angedeutet, wobei darauf hingewiesen werden muß, daß hier die Lage der Gänge seitenverkehrt dargestellt sind, da es um die Bewegung des unteren Schalthebelteiles 5 geht.

Im unteren Teil der Fig. 2 ist dem Schaltschema des unteren Schalthebelteiles 5 die normale Schaltkulisse 15 im Getriebe gegenübergestellt, in der ein Schaltfinger 16 der inneren Schaltvorrichtung geführt wird.

Im Bereich der Neutralgasse N und der Schaltgassen 1/2 und 3/4 sowie 5, ist eine ungehinderte Bewegung des unteren Schalthebelteiles 5 möglich. Im Bewegungsweg des Schalthebelteiles 5 in Richtung Einrücken des Rückwärtsganges ist jedoch ein fester Vorsprung 12 angeordnet, der ein Durchschalten in den Rückwärtsgang verhindert. Vorgelagert dem Vorsprung 12 ist an der Zwischenplatte 10 eine Wandung 13 vorgesehen, entlang der nur durch elastische Verformung des Seilzuges oder eines Torsionselementes einer Stange im Schaltgestänge eine bewußte Bewegung des unteren Schalthebelteiles 5 in die Schaltgasse Rw für den Rückwärtsgang möglich ist.

Aus der Gegenüberstellung der Bewegungsabläufe am Schaltfinger im Getriebe (unterer Teil der Fig. 2) und am unteren Schalthebelteil 5 (oberer Teil der Fig. 2) wird ersichtlich, daß das elastische Überdrücken unter Ausnutzung der Elastizität des Schaltgestänges möglich ist.

Aus einem Vergleich der Fig. 3 und 4, in denen einerseits ein Diagramm der Wählkraft über der Position des unteren Schalthebelteiles 5 beim Einrücken des Rückwärtsganges und andererseits ein Diagramm der Wählkraft über der Position des Schaltfingers 16 bei einer Vorwählbewegung in die Schaltgasse des 5. Ganges und des Rückwärtsganges durch seitliches Überdrücken nachfolgend der Blockage in der Neutralgasse durch Umgehen des Vorsprunges 12 durch eine Bewegung entlang der Wandung 13 aufgezeigt ist, wird ersichtlich, daß diese unterschiedlichen Wege, von 0 nach A über B und Rw und von 0 nach C und nach Rw nur durch eine entsprechende Elastizität im Schaltgestänge ermöglicht werden.

Eine solche Elastizität ist vornehmlich bei Bowden-Zug-Schaltvorrichtungen im allgemeinen bereits gegeben und kann in Schaltgestängen durch ein Torsionselement bereitgestellt werden.

## Patentansprüche

1. Schaltvorrichtung für Wechselgetriebe von Kraftfahrzeugen mit einer Rückwärtsgangsperre, mit einem in einem Schaltgehäuse (1) über ein Kugelgelenk (4/6/7) schwenkbar gelagerten Schalthebel (2), der zur Vorwahl von Schaltgassen (1/2, 3/4 und 5/RW) seitlich und zum Einrücken der Gänge nach vorn und nach hinten schwenkbar ist und wobei der unterhalb des Kugelgelenkes (4) wirkende Schalthebelteil (5) mit einer am Eingang des Schaltgehäuses (1) angeordneten Zwischenplatte (10) mit einem Sperranschlag für den Rückwärtsgang zusammenwirkt, der nur durch bewußte Betätigung am Schalthebel (2) zum Einrücken des Rückwärtsganges überwindbar ist,
**dadurch gekennzeichnet, daß**
- der Sperranschlag für den Rückwärtsgang durch einen in die Schaltgasse des Rückwärtsganges (RW) einragenden festen Vorsprung (12) gebildet ist, benachbart dem in der Neutral- oder Vorwählgasse (N) eine Wandung (13) vorgesehen ist, entlang der durch elastische Verformung eines Teiles des Schaltgestänges der Sperranschlag für den Rückwärtsgang in Form des festen Vorsprunges (12) umgehbar ist.

2. Schaltvorrichtung für Wechselgetriebe von Kraftfahrzeugen mit einer Rückwärtsgangsperre nach Anspruch 1,
**dadurch gekennzeichnet, daß**
- der feste Vorsprung (12) und die benachbarte Wandung (13) an einem Bauteil in Form einer Zwischenplatte (10) aus hart elastischem Material ausgebildet sind.

3. Schaltvorrichtung für Wechselgetriebe von Kraftfahrzeugen mit einer Rückwärtsgangsperre nach Anspruch 1,
**dadurch gekennzeichnet, daß**
- die innere Kontur (11) und der feste Vorsprung (12) und die Wandung (13) unmittelbar durch Wandungen des Schaltgehäuses (1) gebildet sind.

4. Schaltvorrichtung für Wechselgetriebe von Kraftfahrzeugen mit einer Rückwärtsgangsperre nach Anspruch 1,
**dadurch gekennzeichnet, daß**
- die erforderliche Elastizität zwischen Getriebe und Schaltung durch eine Seilzugkonstruktion mit elastischen Elementen erreicht wird.

5. Schaltvorrichtung für Wechselgetriebe von Kraftfahrzeugen mit einer Rückwärtsgangsperre nach Anspruch 1,
**dadurch gekennzeichnet, daß**
- die erforderliche Elastizität zwischen Getriebe und Schaltung durch ein elastisches Torsionselement im Schaltgestänge erreicht wird.

## Claims

1. Shift mechanism for change-speed gearing in motor vehicles with reverse gear lockout with a shift lever (2) arranged in shift housing (1) in a pivoting way through a ball joint (4/6,/7), wherein this shift lever (2) for the purpose of pre-selecting shift paths (1/2, 3/4, 5/R) can be pivoted sideways and for the purpose of engaging the gears can be pivoted backwards and forwards, and wherein the shift lever part (5) working below the ball joint (4) works in association with an intermediate plate (10) arranged at the entry of the shift housing (1) with a locking stop for the reverse gear, which can only be overcome through active manipulation of the shift lever (2) for the purpose of engaging the reverse gear,
**characterised in that**
- the locking stop for the reverse gear is formed from a fixed projection (12) extending into the shift path of the reverse gear (R), beside which in the neutral or preselection path (N) a wall (13) is provided, along which through elastic deformation of a part of the shift rod the locking stop for the reverse gear in the form of the fixed projection (12) can be by-passed.

2. Shift mechanism for change-speed gearing in motor vehicles with reverse gear lockout according to Claim 1,
**characterised in that**
- the fixed projection (12) and the neighbouring wall (13) are formed in a component in the form of an intermediate plate (10) made from hard elastic material.

3. Shift mechanism for change-speed gearing in motor vehicles with reverse gear lockout according to Claim 1,
**characterised in that**
the inner contour (11) and the fixed projection (12) and the wall (13) are formed directly from walls of the shift housing (1).

4. Shift mechanism for change-speed gearing in motor vehicles with reverse gear lockout according to Claim 1,
**characterised in that**
- the necessary elasticity between gearing and shifting is achieved through a cable pull construction with elastic elements.

5. Shift mechanism for change-speed gearing in motor vehicles with reverse gear lockout according to Claim 1,
**characterised in that**
- the necessary elasticity between gearing and shifting is achieved through an elastic torsion element in the shift rod.

## Revendications

1. Dispositif de changement de vitesses pour boîtes de vitesses de véhicules automobiles, équipé d'un verrouillage de la marche arrière, comprenant un levier sélecteur (2) qui est monté pivotant dans un carter de sélection (1), par l'intermédiaire d'une articulation sphérique (4/6/7), et peut pivoter latéralement en vue de la présélection de couloirs d'enclenchement (1/2, 3/4 et 5/MAR), et vers l'avant et vers l'arrière en vue de l'enclenchement des rapports, sachant que la partie (5) du levier sélecteur, qui agit au-dessous de l'articulation sphérique (4), coopère avec une plaque intercalaire (10) disposée à l'entrée du carter de sélection (1), et munie d'une butée de blocage de la marche arrière dont l'effet ne peut être surmonté que par actionnement délibéré du levier sélecteur (2), en vue d'enclencher la marche arrière,
**caractérisé par le fait que**
- la butée de blocage de la marche arrière est formée d'un mentonnet fixe (12) s'engageant dans le couloir d'enclenchement de la marche arrière (MAR) et au voisinage duquel est prévu, dans le couloir neutre ou de présélection (N), un cloisonnement (13) le long duquel une déformation élastique d'une partie de la tringlerie de commutation permet de contourner la butée de blocage de la marche arrière, revêtant la forme dudit mentonnet fixe (12).

2. Dispositif de changement de vitesses pour boîtes de vitesses de véhicules automobiles, équipé d'un verrouillage de la marche arrière, selon la revendication 1,
**caractérisé par le fait que**
- le mentonnet fixe (12), et le cloisonnement voisin (13), sont ménagés sur une pièce structurelle revêtant la forme d'une plaque intercalaire (10) en un matériau à élasticité rigide.

3. Dispositif de changement de vitesses pour boîtes de vitesses de véhicules automobiles, équipé d'un verrouillage de la marche arrière, selon la revendication 1,
**caractérisé par le fait que**
- le profil intérieur (11), le mentonnet fixe (12) et le cloisonnement (13) sont directement formés par des parois du carter de sélection (1).

4. Dispositif de changement de vitesses pour boîtes de vitesses de véhicules automobiles, équipé d'un verrouillage de la marche arrière, selon la revendication 1,
**caractérisé par le fait que**
- l'élasticité nécessaire, entre la boîte de vitesses et l'embrayage, est obtenue par un agencement structurel à câble de traction, muni d'éléments élastiques.

5. Dispositif de changement de vitesses pour boites de vitesses de véhicules automobiles, équipé d'un verrouillage de la marche arrière, selon la revendication 1,
**caractérisé par le fait que**
- l'élasticité nécessaire, entre la boîte de vitesses et l'embrayage, est obtenue par un élément élastique de torsion dans la tringlerie de commutation.
